# EUROPÄISCHE PATENTSCHRIFT

(11) **EP 1 126 987 B1**
(45) Veröffentlichungstag und Bekanntmachung des Hinweises auf die Patenterteilung: **03.08.2005**
(21) Anmeldenummer: 99955759.8
(22) Anmeldetag: 22.09.1999
(51) Int. Cl.: B60K 6/04

(54) **HYBRIDGETRIEBE, INSBESONDERE FÜR KRAFTFAHRZEUGE**
HYBRID TRANSMISSION, ESPECIALLY FOR MOTOR VEHICLES
BOITE DE VITESSES HYBRIDE, NOTAMMENT POUR AUTOMOBILES

(30) Priorität: 03.11.1998 DE 19850550; 01.02.1999 DE 19903936
(43) Veröffentlichungstag der Anmeldung: 29.08.2001
(73) Patentinhaber: ROBERT BOSCH GMBH, 70442 Stuttgart (DE)
(72) Erfinder: SCHNELLE, Klaus-Peter, D-71254 Ditzingen (DE)
(86) Internationale Anmeldenummer: PCT/DE1999/003026
(87) Internationale Veröffentlichungsnummer: WO 2000/026053

(56) Entgegenhaltungen:
- EP-A- 0 703 659
- EP-A- 0 755 818
- DE-A- 4 122 628
- DE-A- 19 730 858
- JP-A- 50 030 223
- US-A- 5 571 058

## Beschreibung

### Stand der Technik

Die Erfindung betrifft ein Getriebe, insbesondere für Kraftfahrzeuge, nach dem Oberbegriff des Anspruchs 1. Ein derartiges Getriebe ist in dem Artikel "A development of Toyota Hybrid System" (Technical Review Vol.47 No.2, 2. Apr.1998) beschrieben. Bei dem bekannten Getriebe für ein Hybridfahrzeug ist ein einziges Planetengetriebe vorgesehen. Dessen mit der Ausgangswelle verbundenes Hohlrad ist mit einer ersten Elektromaschine gekoppelt, während das Sonnenrad mit einer zweiten Elektromaschine verbunden ist. Über den mit der Antriebs- bzw. Kurbelwelle des Verbrennungsmotors verbundenen Planetenträger wird ein Antriebsmoment in das Planetengetriebe eingeleitet. Durch eine Variation der Drehzahl des mit der zweiten Elektromaschine gekoppelten Sonnenrades läßt sich gegebener, von dem Verbrennungsmotor erzeugter Planetenraddrehung am Hohlrad eine beliebige Drehzahl einstellen, wodurch sich zwischen dem Hohlrad und somit der Ausgangswelle und dem Verbrennungsmotor beliebige Übersetzungsverhältnisse erzielen lassen. Die Drehmomente werden durch das Planetengetriebe stets in einem festen Verhältnis zwischen Verbrennungsmotor, Ausgangswelle und zweiter Elektromaschine aufgeteilt. Bei einem gegebenen Drehmoment des Verbrennungsmotors und einem bestimmten Übersetzungsverhältnis liegt damit die Drehzahl und das erforderliche Drehmoment an der zweiten Elektromaschine fest. Ändert sich die erforderliche Drehzahl an der zweiten Elektromaschine, so variiert auch deren elektrische Leistung. Im Generatorbetrieb der zweiten Elektromaschine kann die dabei erzeugte Leistung an die erste Elektromaschine wieder abgegeben werden, im Motorbetrieb der zweiten Elektromaschine entsprechend umgekehrt. Diesen Vorgang bezeichnet man als elektrische Leistungsverzweigung. Nachteil einer derartigen Leistungsverzweigung sind jedoch die dabei auftretenden Verluste.

Aus diesem Grunde wurde das sogenannte SEL-Getriebe vorgeschlagen (P.Tenberge, W.Hofmann: Mechanisch-elektrische Fahrzeuggetriebe im Vergleich, VDI-Bericht Nr.1393, VDI-Verlag Düsseldorf 1998, S.551 ff.). Dabei ist hinter dem Planetensatz eines Planetengetriebes ein zusätzliches dreistufiges Getriebe angeordnet, das die Drehzahlspreizung der Elektromaschine reduziert. Nachteilig dabei ist die relativ aufwendige Getriebemechanik sowie die zum Schalten der Lamellenkupplungen und -bremsen erforderliche Hydraulik.

### Vorteile der Erfindung

Dokument EP-A-0 755 818 offenbart die Merkmale des Oberbegriffs des Anspruchs 1

Das erfindungsgemäße Getriebe, insbesondere für Kraftfahrzeuge, mit den kennzeichnenden Merkmalen des Anspruchs 1 hat demgegenüber den Vorteil, daß es mechanisch relativ einfach aufgebaut ist und einen guten Wirkungsgrad aufweist. Dies wird gemäß den kennzeichnenden Merkmalen des Anspruchs 1 dadurch erreicht, daß es durch die beiden mit jeweils einer Elektromaschine gekoppelten Umlaufgetriebe möglich ist, den elektrischen Leistungsfluß der beiden Elektromaschinen zu reduzieren, so daß beispielsweise im Generatorbetrieb von den beiden Elektromaschinen lediglich die vom Bordnetz benötigte Leistung erzeugt wird.

Weitere Vorteile und vorteilhafte Weiterbildungen des erfindungsgemäßen Getriebes, insbesondere für Kraftfahrzeuge, ergeben sich aus den Unteransprüchen und der Beschreibung.

Durch die Ankopplung der beiden Elektromaschinen an jeweils eine Getriebewelle und die Verwendung von Umlaufgetrieben kann auf herkömmliche Kupplungen verzichtet werden. Die beiden Elektromaschinen ersetzen außerdem einen zum Starten des Verbrennungsmotors benötigten Anlasser sowie eine Lichtmaschine und Synchronisationseinrichtungen zum Schalten einzelner Gänge. Ferner läßt sich durch die Verwendung zweier Getriebewellen ein Schalten der Gänge ohne Zugkraftunterbrechung erzielen. Mittels der beiden Elektromaschinen ist es darüber hinaus möglich, im Bereich zwischen zwei Getriebestufen eine stufenlose Übersetzung zu ermöglichen.

### Zeichnung

Ausführungsbeispiele der Erfindung sind in der Zeichnung dargestellt und werden nachfolgend näher erläutert. Es zeigen:
Figur 1 ein erstes erfindungsgemäßes Getriebe in einer schematischen Darstellung und die
Figuren 2 bis 4 gegenüber der Figur 1 abgewandelte Getriebe, ebenfalls in schematischen Darstellungen.

### Beschreibung der Ausführungsbeispiele

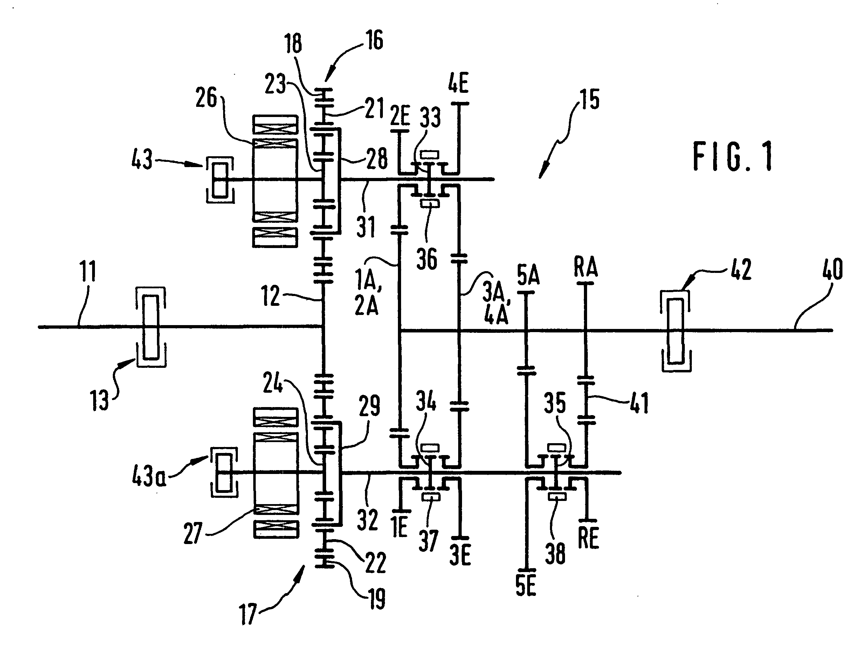

In der Figur 1 ist ein Teil des Antriebsstrangs eines Kraftfahrzeugs dargestellt. Der Antriebsstrang umfaßt unter anderem die Kurbelwelle 11 eines ansonsten nicht dargestellten Verbrennungsmotors, an deren Ende ein Zahnkranz 12 angeordnet ist. Weiterhin wirkt die Kurbelwelle 11 mit einer Motorbremse 13 zusammen. An den Zahnkranz 12 ist ein Getriebe 15 ankoppelbar, das im Ausführungsbeispiel als Dreiwellengetriebe ausgebildet ist.

Das Getriebe 15 weist zwei vorzugsweise identische Umlaufgetriebe, insbesondere zwei Planetengetriebesätze 16, 17 auf. Jeder Planetengetriebesatz 16, 17 hat, wie an sich bekannt, jeweils ein innen und außen verzahntes Hohlrad 18, 19, mehrere Planetenräder 21, 22 sowie ein Sonnenrad 23, 24. Die Ankopplung des Getriebes 15 an den Zahnkranz 12 erfolgt über die Außenverzahnungen der Hohlräder 18, 19 der Planetengetriebesätze 16, 17. Auf der der Kurbelwelle 11 zugewandten Seite der Planetengetriebesätze 16, 17 ist jedes Sonnenrad 23, 24 mit einer Elektromaschine 26, 27 gekoppelt. Die miteinander, zum Beispiel über einen elektrischen Zwischenkreis und mit der Bordbatterie des Kraftfahrzeugs verbundenen Elektromaschinen 26, 27 sind mit einer Leistungselektronik für einen Vierquadrantenbetrieb ausgerüstet. Die Planetenträger 28, 29 der Planetengetriebesätze 16, 17 sind auf der den Elektromaschinen 26, 27 gegenüberliegenden Seite mit Getriebewellen 31, 32 verbunden.

Die beiden Getriebewellen 31, 32 tragen die Eingangszahnräder 1E bis 5E und RE eines 5-Gang-Schaltgetriebes. Um die lose auf den Getriebewellen 31, 32 angeordneten Eingangszahnräder 1E bis 5E und RE mit den Getriebewellen 31, 32 zu verbinden, ist auf diesen ferner zwischen den Eingangszahnrädern 2E und 4E, 1E und 3E sowie 5E und RE jeweils ein Zahnrad 33, 34, 35 drehfest angeordnet. Die Zahnräder 33, 34, 35 können mittels elektrisch betätigbaren Schiebemuffen 36, 37, 38 und Klauenkupplungen mit dem jeweiligen Eingangszahnrad 1E bis 5E und RE in Eingriff gebracht und somit kraftschlüssig verbunden werden.

Die Eingangszahnräder 1E bis 5E und RE kämmen in Ausgangszahnrädern 1A bis 5A und RA, die auf einer Ausgangswelle 40 drehfest angeordnet sind, wobei zwischen dem Eingangszahnrad RE und dem Ausgangszahnrad RA noch ein Zwischenzahnrad 41 angeordnet ist. Um ein Blockieren bzw. Feststellen der Ausgangswelle 40 zu ermöglichen, wirkt diese weiterhin mit einer Bremse 42 zusammen. Die Bremse 42 kann auch die Betriebsbremse des Kraftfahrzeugs sein.

Im folgenden werden verschiedene Betriebsarten beschrieben, die mit dem oben beschriebenen Getriebe 15 realisiert werden können, wobei die Steuerung und Regelung sowohl des Getriebes 15 als auch des Verbrennungmotors mittels elektronischer Steuergeräte erfolgt: Zum Starten des Verbrennungsmotors des Kraftfahrzeugs bei Fahrzeugstillstand ist die Bremse 42 aktiviert, d.h. daß die Ausgangswelle 40 blockiert ist. Ferner ist an den beiden Getriebewellen 31, 32 jeweils ein Gang, zum Beispiel der erste und der zweite Gang eingelegt, wozu sich die Schiebemuffen 37, 38 in Überdeckung mit den entsprechenden Eingangszahnrädern 1E und 2E befinden. Durch das Einlegen eines Ganges auf jeder Getriebewelle 31, 32 sind die Planetenträger 28, 29 der Planetengetriebesätze 16, 17 fest, d.h. sie können sich nicht drehen, wenn ein Startmoment über die Sonnenräder 23, 24 eingeleitet wird. Nun werden die beiden Elektromaschinen 26, 27 von der Bordbatterie motorisch betrieben. Das von den Elektromaschinen 26, 27 in die Sonnenräder 23, 24 eingeleitete Drehmoment erzeugt dabei über die sich drehenden Planetenräder 21, 22 eine Drehung des jeweiligen Hohlrades 18, 19, welche wiederum den Zahnkranz 12 der Kurbelwelle 11 mit der erforderlichen Startdrehzahl antreiben, wodurch der Verbrennungsmotor gestartet wird.

Eine übliche bzw. sinnvolle Auslegung der Planetengetriebesätze 16, 17 führt zu einer Startübersetzung von ca. 4:1. Unter der Annahme, daß ein erforderliches Startdrehmoment eines Verbrennungsmotors in der Größenordnung von ca. 200Nm liegt, muß somit jede als Elektromotor wirkende Elektromaschine 26, 27 ca. 25Nm bereitstellen. Dieses erforderliche Drehmoment bestimmt gleichzeitig die Baugröße bzw. Leistungsstufe der Elektromaschinen 26, 27.

Ergänzend wird an dieser Stelle angemerkt, daß die beiden Elektromaschinen 26, 27 im Startmodus, d.h. mit festgesetzten Planetenträgern 28, 29 nach dem Starten des Verbrennungsmotors ihrerseits über den Zahnkranz 12 vom Verbrennungsmotor getrieben werden. Aufgrund der oben erwähnten Übersetzungsverhältnisse der Planetengetriebesätze 16, 17 werden die Elektromaschinen 26, 27 dann mit etwa der vierfachen Motordrehzahl des Verbrennungsmotors angetrieben. Um die Grenzdrehzahlen der Elektromaschinen 26, 27 nicht zu überschreiten, sollte für diesen Fall die Motordrehzahl des Verbrennungsmotors während des Startmoduses begrenzt werden.

Nachfolgend wird der Normalbetrieb des Kraftfahrzeugs beschrieben, bei dem sich dieses mit einer gleichförmigen oder veränderlichen Geschwindigkeit bewegt. In diesem Fall ist in dem Getriebe 15 in beiden Getriebewellen 31, 32 jeweils ein Gang eingelegt, zum Beispiel der zweite und der dritte Gang. Die entsprechenden Zahnräder 2E und 3E sind somit kraftschlüssig mit den Zahnrädern 2A und 3A der Ausgangswelle 40 verbunden. Es besteht ein definiertes Verhältnis zwischen den Drehzahlen der beiden Planetenträger 28 und 29 entsprechend der Übersetzungsverhältnisse zwischen dem zweiten und dem dritten Gang, wobei der Planetenträger 28 des zweiten Ganges mit einer größeren Drehzahl dreht als der Planetenträger 29 des dritten Ganges. Weiterhin ist die Drehzahl der Ausgangswelle 40 proportional zur Fahrgeschwindigkeit des Kraftfahrzeugs. Da die vom Verbrennungsmotor getriebenen Hohlräder 18, 19 bei identischen Planetengetriebesätzen 16, 17 mit gleicher Drehzahl drehen, ergeben sich somit definierte Drehzahlen der mit den Elektromaschinen 26, 27 gekoppelten Sonnenräder 23, 24. Wird nun das Drehzahlniveau der beiden Elektromaschinen 26, 27 verändert, so verändert sich bei konstanter Motordrehzahl des Verbrennungsmotors auch das Verhältnis zwischen der Motordrehzahl des Verbrennungsmotors und der Drehzahl der Ausgangswelle 40. Mit anderen Worten gesagt bedeutet dies, daß eine Variation des Drehzahlniveaus der Elektromaschinen 26, 27 zu einer (stufenlosen) Variation der Getriebeübersetzung bei fest eingelegten Gängen an den Getriebewellen 31, 32 führt.

Bei einem von dem Verbrennungsmotor vorgegebenen Drehmoment und einem benötigten Antriebsmoment an der Ausgangswelle 40 ergibt sich ein fest vorgegebenes Summendrehmoment an den beiden Elektromaschinen 26, 27. Weiterhin steht das Drehmoment des Verbrennungsmotors und das Summendrehmoment an den beiden Elektromaschinen 26, 27 stets in einem festen Verhältnis, solange keine Bremse betätigt wird. Daher läßt sich das aktuelle Drehmoment des Verbrennungsmotors sehr genau aus dem Summendrehmoment der beiden Elektromaschinen 26, 27 ableiten, welches aus deren Steuerung bekannt ist. Die Kenntnis des aktuellen Drehmoments des Verbrennungsmotors ist für eine koordinierte Antriebsstrang- und Motorsteuerung hilfreich bzw. kann diese vereinfachen oder verbessern.

Durch die Verzweigung des Drehmomentes über die beiden Getriebewellen 31, 32 kann das Summendrehmoment der beiden Elektromaschinen 26, 27 beliebig zwischen diesen aufgeteilt werden. Da aufgrund der unterschiedlichen eingelegten Gänge an den beiden Getriebewellen 31, 32 die beiden Elektromaschinen 26, 27 eine unterschiedliche Drehzahl aufweisen, variiert dabei auch deren elektrische Leistung.

Besonders vorteilhaft ist es, im Normalbetrieb die beiden Elektromaschinen 26, 27 als Generatoren wirken zu lassen, die lediglich die vom Bordnetz benötigte Energie bzw. Leistung erzeugen. Dies hat zur Folge, daß sich bei einer bestimmten erforderlichen elektrischen Leistung der beiden Elektromaschinen 26, 27 ein bestimmtes Drehzahlniveau an den beiden Elektromaschinen 26, 27 und somit auch ein bestimmtes Übersetzungsverhältnis des Getriebes 15 einstellt. Die mit den Elektromaschinen 26, 27 innerhalb bestimmter Grenzen mögliche stufenlose Veränderung des Übersetzungsverhältnisses wird allein dadurch erreicht, indem die vom Bordnetz benötigte elektrische Leistung zwischen den beiden generatorisch arbeitenden Elektromaschinen 26, 27 aufgeteilt wird, wobei keine verlustbehaftete Leistungsverzweigung zwischen den beiden Elektromaschinen 26, 27 entsteht.

Es genügt, wenn die mittels der beiden Elektromaschinen 26, 27 mögliche Spreizung des Übersetzungsverhältnisses einen relativ geringen Bereich abdeckt, da größere Veränderungen des Übersetzungsverhältnisses über einen Gangwechsel realisiert werden können. Wenn die mögliche Spreizung für einen Gang, zum Beispiel bei niedrigen Bordnetzleistungen, nicht ausreichend ist kann diese erhöht werden, indem entweder ein (verlustbehafteter) Leistungsfluß zwischen den beiden Elektromaschinen 26, 27 zugelassen wird, oder aber indem die elektrische Leistung zum Laden der Bordbatterie über den eigentlichen Bordnetzbedarf hinaus erhöht wird.

Nunmehr wird ein Schaltvorgang im Getriebe 15 erläutert, der zur Änderung des Übersetzungsverhältnisses erforderlich ist, wenn zum Beispiel der Verbrennungsmotor bei einer bestimmten Drehzahl bei entsprechend höherer Last eine höhere Fahrgeschwindigkeit ermöglichen soll. Dabei wird exemplarisch davon ausgegangen, daß an der zweiten Getriebewelle 32 vom dritten in den fünften Gang geschaltet werden soll, während in der ersten Getriebewelle 31 der vierte Gang eingelegt bleibt. Vor dem eigentlichen Schaltvorgang wird dazu die der zweiten Getriebewelle 32 zugeordnete Elektromaschine 27 lastfrei geschaltet, wodurch das Moment in der zweiten Getriebewelle 32, mit Ausnahme eines kleinen, aus der Massenträgheit der Bauteile herrührenden Moments, zu Null wird. Der Kraftfluß findet in diesem Zustand ausschließlich über die erste Getriebewelle 31 statt, wobei deren zugeordnete Elektromaschine 26 einen Teil des Antriebsmoments abstützt und dabei als Motor oder aber als Generator arbeiten kann. Sobald die zweite Getriebewelle 32 lastfrei ist, kann der eingelegte dritte Gang durch Trennen der Klauenkupplung und Verschieben der Schiebemuffe 37 herausgenommen werden. Anschließend erzeugt die Elektromaschine 27 der zweiten Getriebewelle 32 die erforderliche Synchronisationsdrehzahl, bei der die zweite Getriebewelle 32 mit einer Drehzahl gedreht wird, die der Drehzahl des über die Ausgangswelle 40 angetriebenen Zahnrads 5E des fünften Gangs entspricht. Wenn dies erfolgt ist, wird der Kraftschluß zwischen der zweiten Getriebewelle 32 und dem Zahnrad 5E durch Verschieben der Schiebemuffe 38 hergestellt. Die Steuerung des Getriebes 15 kann die zur Synchronisation der zweiten Getriebewelle 32 benötigte Drehzahl mittels der Drehzahlen der Elektromaschine 26 sowie des Verbrennungsmotors ermitteln. Zusätzliche Sensoren zur Drehzahlerfassung an den Getriebewellen 31, 32 sind nicht erforderlich.

Die anderen Schaltwechsel beim Hoch- bzw. Herunterschalten erfolgen sinngemäß, wobei bei allen Schaltwechseln charakteristisch ist, daß stets ein Kraftschluß zwischen der Kurbelwelle 11 des Verbrennungsmotors und der Ausgangswelle 40 über eine der beiden Getriebewellen 31, 32 vorhanden ist, so daß die Schaltvorgänge ohne Zugkraftunterbrechung erfolgen können.

Mit dem Getriebe 15 lassen sich besonders vorteilhaft sogenannte Hybridfahrzeuge betreiben, die sowohl einen Elektromotor als auch einen Verbrennungsmotor aufweisen. Der Fahrzeugbetrieb mittels Elektromotor, der zum Beispiel aus Gründen der Luftreinhaltung innerstädtisch erfolgt, wird dabei mittels den beiden Elektromaschinen 26, 27 realisiert, die aus der Bordbatterie mit der dafür erforderlichen Energie versorgt werden. Zur Abstützung des durch die Elektromaschinen 26, 27 über die Planetenträger 28, 29 in die Getriebewellen 31, 32 eingeleiteten Drehmoments müssen dabei die Hohlräder 18, 19 der Planetengetriebesätze 16, 17 festgesetzt werden. Dies erfolgt auf einfache Weise über ein Betätigen der Motorbremse 13, welche über den Zahnkranz 12 auf die Hohlräder 18, 19 wirkt.

Soll nun während des rein elektrischen Fahrens der Verbrennungsmotor wieder gestartet werden, so werden dazu der zweite und der Rückwärtsgang im Getriebe 15 eingelegt. Dabei dreht die Elektromaschine 27 rückwärts, das heißt mit der für den Motorstart erforderlichen Drehrichtung, während die Elektromaschine 26 vorwärts angetrieben wird. Von beiden Elektromaschinen 26, 27 wird somit ein gleichwirkendes antreibendes Drehmoment in die Ausgangswelle 40 eingeleitet. Aufgrund der unterschiedlichen Übersetzungsverhältnisse zwischen dem eingelegten zweiten Gang und dem eingelegten Rückwärtsgang wird über das Hohlrad 19 der dem Rückwärtsgang zugeordneten zweiten Elektromaschine 27 ein höheres (über die Motorbremse 13 abgestütztes) Drehmoment auf den Zahnkranz 12 übertragen als über das Hohlrad 20. Zum eigentlichen Starten genügt es daher, die Motorbremse 13 zu lösen, worauf der Zahnkranz 12 und die Kurbelwelle 11 in der erforderlichen Anlaßrichtung des Verbrennungsmotors über das Hohlrad 19 von der zweiten Elektromaschine 27 gedreht wird. Wenn der Verbrennungsmotor gestartet ist, wird entsprechend der oben beschriebenen Gangwechsel der Rückwärtsgang an der zweiten Getriebewelle 32 herausgenommen, und satt dessen der erste Gang oder aber der dritte Gang eingelegt.

Zusätzlich sei erwähnt, daß es während des Startens des Verbrennungsmotors durch das von diesem dabei in den Antriebsstrang eingeleitete Drehmoment zu einem für den Fahrer unangenehmen Ruckeln kommen kann, das durch eine entsprechende Regelstrategie durch die beiden Elektromaschinen 26, 27 ausgeglichen werden kann.

Das bereits erwähnte Fahren des Kraftfahrzeugs ausschließlich mittels der Elektromaschinen 26, 27 hat zwangsläufig eine relativ hohe Energieentnahme aus der Bordbatterie zur Folge. Um die erforderliche Kapazität der Bordbatterie zu begrenzen bzw. ein Wiederaufladen während des verbrennungsmotorischen Betriebs zu ermöglichen, wurde bereits der Betrieb der beiden Elektromaschinen 26, 27 als Generator erwähnt. Besonders vorteilhaft ist es, die während des Schiebebetriebs im Kraftfahrzeug gespeicherte Rollenergie auszunutzen, um die Elektromaschinen 26, 27 als Generatoren zu betreiben. Dazu wird der Verbrennungsmotor im (lastfreien) Schiebebetrieb abgeschaltet und die Motorbremse 13 aktiviert. Somit werden die beiden mit den Elektromaschinen 26, 27 gekoppelten Sonnenräder 23, 24 über die sich drehenden Planetenträger 28, 29 getrieben.

Das oben beschriebene Getriebe 15 kann in vielfältiger Weise abgewandelt werden. So kann es beispielsweise erforderlich sein, an mindestens einer der beiden Elektromaschinen 26, 27 eine zusätzliche Bremse 43, 43a vorzusehen. Damit kann ein Anfahren der Kraftfahrzeugs aus dem Stand mit einer hohen Leistung ermöglicht werden. Dies erklärt sich daraus, daß beim Fahrzeugstillstand die beiden Elektromaschinen 26, 27 bei einem bereits erwähnten Übersetzungsverhältnis der Planetengetriebesätze 16, 17 von ca. 4:1 mit etwa der vierfachen Motordrehzahl laufen. Wird nun über den Verbrennungsmotor beim Anfahren ein relativ hohes Anfahrmoment in die Kurbelwelle 11 eingeleitet, so muß dieses von den Elektromaschinen 26, 27 abgestützt werden, was zwangsläufig kurzzeitig zu sehr hohen elektrischen Leistungen an den Elektromaschinen 26, 27 führt. Durch die Verwendung wenigstens einer zusätzlichen, mit wenigstens einer Elektromaschine 26, 27 zusammenwirkenden Bremse 43, 43a kann dieses Anfahrmoment von der Bremse 43, 43a aufgenommen und in Reibarbeit umgesetzt werden. Die Bremse 43, 43a kann als mechanisch wirkende Reibungsbremse (Backen- oder Lamellenbremse) ausgebildet sein. Besonders vorteilhaft ist jedoch die Ausbildung der Bremse 43, 43a als Wirbelstrombremse. Diese Wirbelstrombremse kann zusätzlich als Bestandteil eines Zuheizersystems (zum Beispiel für einen wassergekühlten Generator) dienen und kurzzeitig sehr hohe Momente abstützen.

Das Getriebe 15 ist im Ausführungsbeispiel als Planetengetriebe dargestellt und beschrieben. Anstelle von Planetengetrieben können jedoch auch andere Arten von Umlaufgetrieben verwendet werden. Auch ist bei der Verwendung von Planetengetrieben eine andere Kopplung der einzelnen Elemente mit den Bauelementen der Planetengetriebe denkbar. So kann zum Beispiel der Verbrennungsmotor sein Drehmoment auch in die Planetenträger einleiten, während die Getriebewellen mit den Hohlrädern gekoppelt sind.

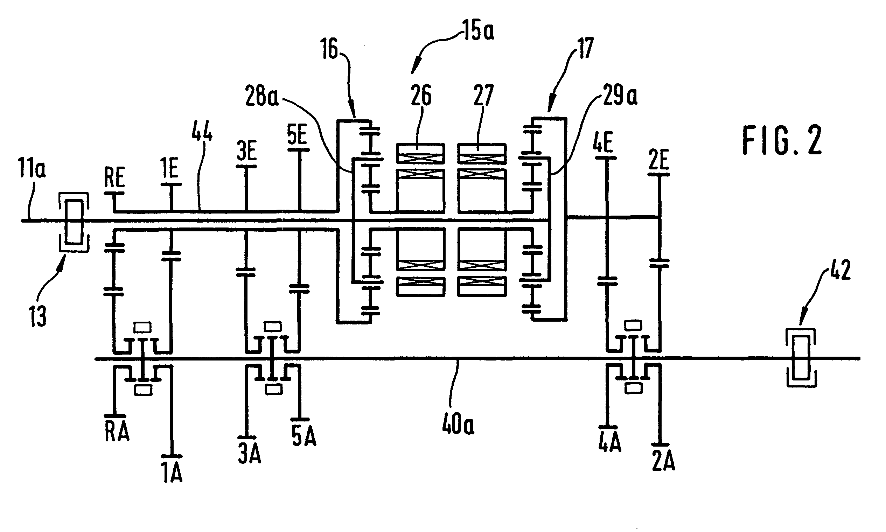

Drei weitere Varianten sind in den Figuren 2, 3 und 4 dargestellt: In der Figur 2 ist ein Getriebe 15a dargestellt, das anstelle eines Dreiwellengetriebes entsprechend der Figur 1 als Hohlwellengetriebe ausgebildet ist. Die mit den Planetenträgern 28a, 29a gekoppelte Kurbelwelle 11a ist dabei von einer Hohlgetriebewelle 44 umfasst, auf der die Eingangszahnräder RE, 1E, 3E und 5E angeordnet sind, während in Verlängerung der Kurbelwelle 11a eine Getriebewelle 45 die Eingangszahnräder 4E und 2E trägt. Die Eingangszahnräder 1E bis 5E und RE wirken mit Ausgangszahnrädern 1A bis 5A und RA zusammen, die auf einer zu der Hohlgetriebewelle 44, der Kurbelwelle 11a und der Getriebewelle 45 parallel verlaufenden Ausgangswelle 40a angeordnet sind. Der Vorteil des in der Figur 2 dargestellten Getriebes 15a ist insbesondere in seiner schmäleren Bauweise zu sehen.

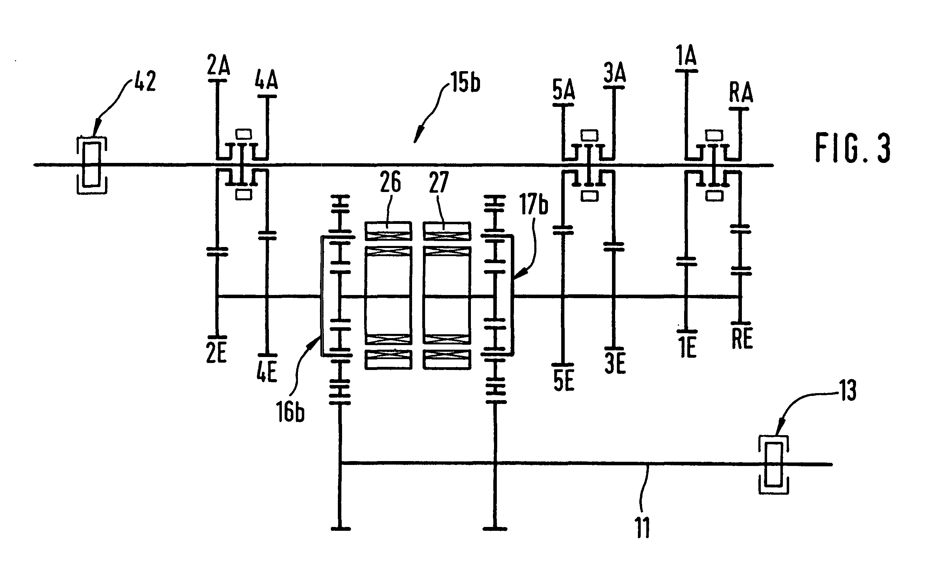

Das in der Figur 3 dargestellte Getriebe 15b unterscheidet sich von dem Getriebe 15 gemäß der Figur 1 insbesondere dadurch, daß die beiden Elektromaschinen 26, 27 nebeneinander und die beiden Planetengetriebesätze 16b, 17b (wie beim Getriebe 15a) spiegelbildlich zueinander angeordnet sind. Auch hier läßt sich durch die Reihenanordnung wie bei dem Getriebe 15a der beiden Elektromaschinen 26, 27 und der Planetengetriebesätze 16b, 17b ein relativ kompaktes Getriebe verwirklichen.

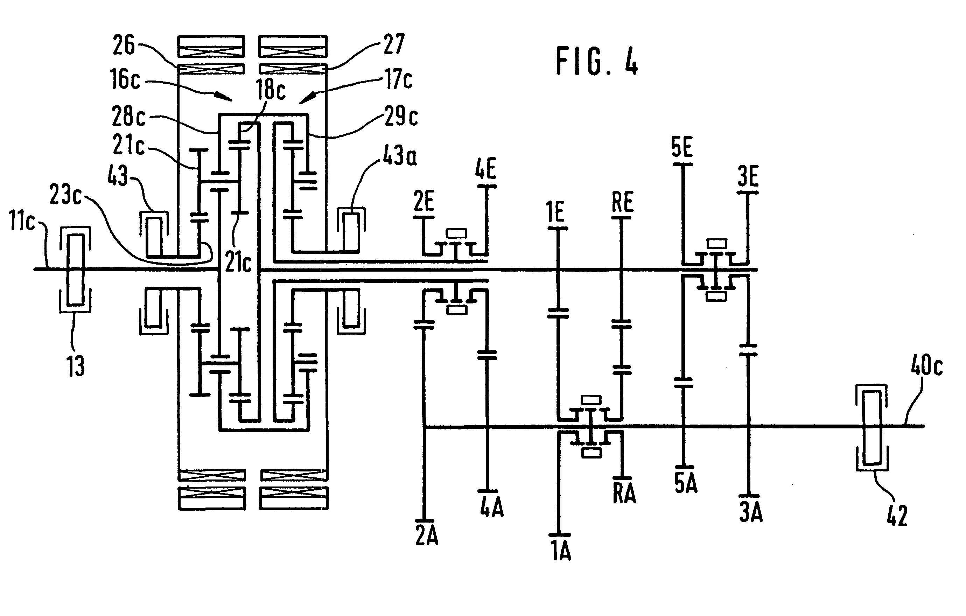

Eine besonders vorteilhafte Variante ist das in der Figur 4 dargestellte Getriebe 15c. Es unterscheidet sich von dem Getriebe 15a insbesondere dadurch, daß die Planetenräder 21c des Planetengetriebes 16c doppelt ausgeführt und durch eine starre Welle verbunden sind. Das erste Planetenrad 21c der linken Seite des Planetenträgers 28c kämmt mit dem mit der Elektromaschine 26 verbundenen Sonnenrad 23c, auf der rechten Seite des Planetenträgers 28c kämmt das zweite Planetenrad 21c mit dem Hohlrad 18c des Antriebs. Daraus ergibt sich ein sehr kompaktes Getriebe, das im Aufbau heutigen Schaltgetrieben ähnlich ist, wobei die Elektromaschinen den Bauraum einnehmen, der bei konventionellen Schaltgetrieben für die Kupplung erforderlich ist.

Selbstverständlich ist es auch denkbar, die Getriebe 15a, 15b oder 15c mit wenigstens einer zusätzlichen Bremse 43, 43a entsprechend dem Getriebe 15 gemäß Figur 1 auszustatten.

## Patentansprüche

1. Getriebe (15; 15a; 15b; 15c), insbesondere für Kraftfahrzeuge, mit einer ein Drehmoment eines Verbrennungsmotors einleitenden Eingangswelle (11; 11a; 11c), die mit wenigstens einem Umlaufgetriebe (16; 16c, 17; 17c) gekoppelt ist, einer mit dem wenigstens einen Umlaufgetriebe (16; 16c, 17; 17c) gekoppelten Ausgangswelle (40; 40a; 40c) sowie zwei mit dem wenigstens einen Umlaufgetriebe (16; 16c, 17; 17c) in Wirkverbindung angeordneten Elektromaschinen (26, 27), wobei die Elektromaschinen (26, 27) weder an die Eingangswelle (11; 11a; 11c) noch an die Ausgangswelle (40; 40a; 40c) gekoppelt sind und wobei die Drehzahlen der beiden Elektromaschinen (26, 27) unabhängig voneinander veränderbar sind, **dadurch gekennzeichnet, daß** die beiden Elektromaschinen (26, 27) mit jeweils einem separaten Umlaufgetriebe (16; 16c, 17; 17c) gekoppelt sind und daß jedes Umlaufgetriebe (16, 17) mit einer separaten Getriebewelle (31, 32) gekoppelt ist, die in Wirkverbindung mit der Ausgangswelle (40; 40a) angeordnet ist.

2. Getriebe nach Anspruch 1, **dadurch gekennzeichnet, daß** auf jeder Getriebewelle (31, 32) Eingangszahnräder (1E bis 5e, RE) angeordnet sind, die in auf der Ausgangswelle (40; 40a) angeordneten Ausgangszahnrädern (1A bis 5A, RA) kämmen.

3. Getriebe nach Anspruch 2, **dadurch gekennzeichnet, daß** Elemente (34 bis 38) zum kraftschlüssigen Verbinden der Eingangs- (1E bis 5e, RE) und der Ausgangszahnräder (1A bis 5A, RA) mit den Getriebewellen (31, 32) und der Ausgangswelle (40; 40a) vorgesehen sind und daß mit Ausnahme von Schaltpausen stets eine kraftschlüssige Verbindung zwischen beiden Getriebewellen (31, 32) und der Ausgangswelle (40; 40a) besteht.

4. Getriebe nach einem der Ansprüche 1 bis 3, **dadurch gekennzeichnet, daß** eine Getriebewelle als Hohlwelle (44) ausgebildet ist, die die Eingangswelle (11a) umfasst.

5. Getriebe nach einem der Ansprüche 1 bis 4, **dadurch gekennzeichnet, daß** die Umlaufgetriebe Planetengetriebe (16, 17) sind, deren Hohlräder (18, 19) mit der Eingangswelle (11), deren Sonnenräder (23; 23a, 24; 24a) mit den Elektromaschinen (26, 27) und deren Planetenträger (28, 29) mit den Getriebewellen (31, 32) gekoppelt sind, oder deren Planetenträger (28, 29) mit der Eingangswelle (11), deren Sonnenräder (23; 23a, 24; 24a) mit den Elektromaschinen (26, 27) und deren Hohlräder (18, 19) mit den Getriebewellen (31, 32) gekoppelt sind.

6. Getriebe nach einem der Ansprüche 1 bis 5, **dadurch gekennzeichnet, daß** die Elektromaschinen (26, 27) axial fluchtend zueinander angeordnet sind.

7. Getriebe nach einem der Ansprüche 1 bis 6, **dadurch gekennzeichnet, daß** zum Erzielen eines stufenlosen Übersetzungsverhältnisses die Drehzahlen der beiden Elektromaschinen (26, 27) veränderbar sind.

8. Getriebe nach einem der Ansprüche 1 bis 7, **dadurch gekennzeichnet, daß** die Eingangswelle (11) und die Ausgangswelle (40; 40a) jeweils eine Bremseinrichtung (13, 42) aufweist.

9. Getriebe nach einem der Ansprüche 1 bis 8, **dadurch gekennzeichnet, daß** wenigstens eine Elektromaschine (26, 27) in Wirkverbindung mit einer Bremseinrichtung (43, 43a) angeordnet ist.

## Claims

1. Transmission (15; 15a; 15b; 15c), in particular for motor vehicles, with an input shaft (11; 11a; 11c) which introduces a torque of an internal combustion engine and which is coupled to at least one epicyclic gear (16; 16c, 17; 17c), with an output shaft (40; 40a; 40c) coupled to the at least one epicyclic gear (16; 16c, 17; 17c), and with two electric machines (26, 27) arranged in operative connection with the at least one epicyclic gear (16; 16c, 17; 17c), the electric machines (26, 27) not being coupled either to the input shaft (11; 11a; 11c) or to the output shaft (40; 40a; 40c), and the rotational speeds of the two electric machines (26, 27) being variable independently of one another, **characterized in that** the two electric machines (26, 27) are coupled in each case to a separate epicyclic gear (16; 16c, 17; 17c), and **in that** each epicyclic gear (16, 17) is coupled to a separate transmission shaft (31, 32) which is arranged in operative connection with the output shaft (40; 40a).

2. Transmission according to Claim 1, **characterized in that** each transmission shaft (31, 32) has arranged on it input gearwheels (1E to 5e, RE) which mesh in output gearwheels (1A to 5A, RA) arranged on the output shaft (40; 40a).

3. Transmission according to Claim 2, **characterized in that** elements (34 to 38) for the non-positive connection of the input gearwheels (1E to 5e, RE) and of the output gearwheels (1A to 5A, RA) to the transmission shafts (31, 32) and to the output shaft (40; 40a) are provided, and **in that**, with the exception of shift intermissions, there is always a non-positive connection between the two transmission shafts (31, 32) and the output shaft (40; 40a).

4. Transmission according to one of Claims 1 to 3, **characterized in that** one transmission shaft is designed as hollow shaft (44) which surrounds the input shaft (11a).

5. Transmission according to one of Claims 1 to 4, **characterized in that** the epicyclic gears are planetary gears (16, 17), the internal gearwheels (18, 19) of which are coupled to the input shaft (11), the sun wheels (23; 23a, 24; 24a) of which are coupled to the electric machines (26, 27) and the planet carriers (28, 29) of which are coupled to the transmission shafts (31, 32) or the planet carriers (28, 29) of which are coupled to the input shaft (11), the sun wheels (23; 23a, 24; 24a) of which are coupled to the electric machines (26, 27) and the internal gearwheels (18, 19) of which are coupled to the transmission shafts (31, 32).

6. Transmission according to one of Claims 1 to 5, **characterized in that** the electric machines (26, 27) are arranged axially in alignment with one another.

7. Transmission according to one of Claims 1 to 6, **characterized in that**, to achieve a continuously variable transmission ratio, the rotational speeds of the two electric machines (26, 27) are variable.

8. Transmission according to one of Claims 1 to 7, **characterized in that** the input shaft (11) and the output shaft (40; 40a) each have a braking device (13, 42).

9. Transmission according to one of Claims 1 to 8, **characterized in that** at least one electric machine (26, 27) is arranged in operative connection with a braking device (43, 43a).

## Revendications

1. Boîte de vitesses (15 ; 15a ; 15b ; 15c), en particulier pour des véhicules automobiles, comportant :
- un arbre d'entrée (11 ; 11a ; 11c) qui transmet un couple de rotation d'un moteur à combustion interne et qui est couplé à au moins un engrenage épicycloïdal (16 ; 16c, 17 ; 17c),
- un arbre de sortie (40 ; 40a ; 40c) couplé à l'au moins un engrenage épicycloïdal (16 ; 16c, 17 ; 17c) ainsi que
- deux machines électriques (26, 27) en liaison active avec l'au moins un engrenage épicycloïdal (16 ; 16c, 17 ; 17c),
dans laquelle les machines électriques (26, 27) ne sont couplées ni à l'arbre d'entrée (11 ; 11a ; 11c) ni à l'arbre de sortie (40 ; 40a ; 40c) et les vitesses de rotation des deux machines électriques (26, 27) peuvent être modifiées indépendamment l'une de l'autre,
**caractérisée en ce que**
les deux machines électriques (26, 27) sont couplées chacune à un engrenage épicycloïdal (16 ; 16c, 17 ; 17c) distinct et
chaque engrenage épicycloïdal (16, 17) est couplé à un arbre de transmission (31, 32) distinct en liaison active avec l'arbre de sortie (40 ; 40a).

2. Boîte de vitesses selon la revendication 1,
**caractérisée en ce que**
sur chaque arbre de transmission (31, 32) sont placées des roues dentées d'entrée (1E à 5E, RE) qui s'engrènent dans des roues dentées de sortie (1A à 5A, RA) placées sur l'arbre de sortie (40 ; 40a).

3. Boîte de vitesses selon la revendication 2,
**caractérisée en ce que**
des éléments (34 à 38) sont destinés à relier par combinaison de forces les roues dentées d'entrée (1E à 5E, RE) et les roues dentées de sortie (1A à 5A, RA) aux arbres de transmission (31, 32) et à l'arbre de sortie (40 ; 40a) et,
hormis les pauses de commutation, il y a toujours une liaison par combinaison de forces entre les deux arbres de transmission (31, 32) et l'arbre de sortie (40 ; 40a).

4. Boîte de vitesses selon l'une des revendications 1 à 3,
**caractérisée en ce que**
un arbre de transmission ayant la forme d'un arbre creux (44) entoure l'arbre d'entrée (11a).

5. Boîte de vitesses selon l'une des revendications 1 à 4,
**caractérisée en ce que**
les engrenages épicycloïdaux sont des engrenages planétaires (16, 17) dont les roues creuses (18, 19) sont couplées à l'arbre d'entrée (11), les roues solaires (23 ; 23a, 24 ; 24a) aux machines électriques (26, 27) et les porte-satellites (28, 29) aux arbres de transmission (31, 32), ou dont les porte-satellites (28, 29) sont couplés à l'arbre d'entrée (11), les roues solaires (23 ; 23a, 24 ; 24a) aux machines électriques (26, 27) et les roues creuses (18, 19) aux arbres de transmission (31, 32).

6. Boîte de vitesses selon l'une des revendications 1 à 5,
**caractérisée en ce que**
les machines électriques (26, 27) sont en alignement axial l'une par rapport à l'autre.

7. Boîte de vitesses selon l'une des revendications 1 à 6,
**caractérisée en ce que**
les vitesses de rotation des deux machines électriques (26, 27) peuvent être modifiées pour obtenir un rapport de changement de vitesses à réglage continu.

8. Boîte de vitesses selon l'une des revendications 1 à 7,
**caractérisée en ce que**
l'arbre d'entrée (11) et l'arbre de sortie (40 ; 40a) ont chacun une installation de freinage (13, 42).

9. Boîte de vitesses selon l'une des revendications 1 à 8,
**caractérisée en ce qu'**
au moins une machine électrique (26, 27) est en liaison active avec une installation de freinage (43, 43a).
